Europäisches Patentamt

European Patent Office

Office européen des brevets

(19)

(11) Veröffentlichungsnummer : **0 420 089 B1**

# (12) EUROPÄISCHE PATENTSCHRIFT

(45) Veröffentlichungstag der Patentschrift :
**17.06.92 Patentblatt 92/25**

(51) Int. Cl.$^5$ : **H04N 1/04**

(21) Anmeldenummer : **90118266.7**

(22) Anmeldetag : **22.09.90**

(54) **Bildleser.**

(30) Priorität : **24.09.89 DE 8911380 U**

(43) Veröffentlichungstag der Anmeldung :
**03.04.91 Patentblatt 91/14**

(45) Bekanntmachung des Hinweises auf die
Patenterteilung :
**17.06.92 Patentblatt 92/25**

(84) Benannte Vertragsstaaten :
**AT BE CH DE DK ES FR GB GR IT LI LU NL SE**

(56) Entgegenhaltungen :
**EP-A- 0 296 365**
**US-A- 3 712 955**
**PATENT ABSTRACTS OF JAPAN, Band 8, Nr.**
**153 (P-287)[1590], 17. Juli 1984; & JP-A-59 52**
**457 (TOSHIBA) 27-03-1984**

(56) Entgegenhaltungen :
**PATENT ABSTRACTS OF JAPAN, Band 13, Nr.**
**144 (E-740)[3492], 10. April 1989; & JP-A-63 306**
**760 (FUJI) 14-12-1988**
**RESEARCH DISCLOSURE, Nr. 201, Januar**
**1981, Seite 5; R. HOWARD et al.: "Maximum**
**performance quasi closed loop scanner ser-**
**vo"**

(73) Patentinhaber : **EUROPEAN MOLECULAR**
**BIOLOGY LABORATORY**
**Meyerhofstrasse 1**
**W-6900 Heidelberg 1 (DE)**

(72) Erfinder : **Hendrix, Jules**
**c/o EMBL, Notkestrasse 85**
**W-2000 Hamburg 52 (DE)**
Erfinder : **Lentfer, Arno**
**Bacherweg 5c**
**W-2000 Hamburg 61 (DE)**

(74) Vertreter : **Richter, Werdermann & Gerbaulet**
**Neuer Wall 10**
**W-2000 Hamburg 36 (DE)**

## Beschreibung

Die Erfindung geht aus von einem Bildleser für eine Vorrichtung zur Abtastung einer durch Röntgenstrahlen belichteten kreisrunden Bildplatte mit zum Bildplattenmittelpunkt einen Abstand (Radius R) aufweisenden Bildelementen mittels Laserstrahlen, der durch einen Elektromotor mit einstellbarer Drehzahl antreibbar ist, und auf dem die Bildplatte lösbar angeordnet ist, mit einer Bildelementabtasteinheit, die mittels eines Antriebes mit vorgebbarer Vorschubgeschwindigkeit radial über die Bildplatte verfahrbar ist und eine Laserlichtzuführeinrichtung und eine optische Bildelementabtasteinrichtung einer optoelektronischen Meßwertübertragungseinrichtung mit einem Photoelektronenvervielfacher aufweist und mit einer Signalaufbereitungseinrichtung.

Es ist aus der EP-A-144 856 bekannt, Bildplatten, bei denen auf einem Trägermaterial eine Schicht von BaFEu:X-Kristallen in einem Bindemittel angeordnet ist, durch Röntgenstrahlen zu belichten. Die Aufzeichnung des Röntgenbildes erfolgt durch Einwirkung der Röntgenstrahlen auf die BaFEu:X-Kristalle. Zur Bildlesung wird die Bildplatte mit Laserlicht abgetastet, wobei die unterschiedlichen, von der Bildplatte absorbierten Röntgenstrahlmengen in Licht mit äquivalenten Intensitäten umgesetzt werden. Das Licht wird dann zunächst in analoge elektrische Signale, dann in digitale Signale umgewandelt, wonach das digitalisierte Bild in einem Computer weiterverarbeitet wird. Die auf der Bildplatte nach der Bildabtastung verbliebene Restbildmenge wird dann dadurch gelöscht, daß die Bildplatte unter Licht gesetzt wird. Die so behandelte Bildplatte kann dann erneut zur Bildaufzeichnung mittels Röntgenstrahlen verwendet werden. Bei bereits bekannten Bildlesern besteht jedoch der Nachteil, daß die Lichtausbeute beim Bildleser beeinträchtigt ist, wodurch die Sensitivität der Bildleser für viele Einsatzbereiche nicht befriedigend ist.

Um die bekannten Bildleser zu verbessern, ist mit der EP-A- 296 365 eine Bildleservorrichtung vorgeschlagen, bei der eine Bildplatte in Form einer Scheibe auf einem Drehplattenhalter angeordnet ist, wobei die Bildplatte zur Speicherung eines Strahlenbildes geeignet ausgebildet ist. Der Bildplattenhalter weist einen Elektromotor mit einstellbarer Drehzahl auf, auf dessen Antriebswelle die Bildplatte lösbar angeordnet wird. Die Bildplatte wird mit einer Bildelementabtasteinheit abgetastet, während sich die Bildplatte dreht, und die Bildelementabtasteinheit wird mit vorgegebener Vorschubgeschwindigkeit radial über die Bildplatte verfahren. Dabei wird die Bildplatte mit einem Laserlicht von einem He-Ne-Laser als Lichtquelle bestrahlt, und die Bildelementabtasteinrichtung nimmt die von der Bildplatte erzeugte Lumineszenz zu jedem bestimmten Punkt auf und ist mit einem Photomultiplier und einer Signalaufbereitungseinrichtung verbunden. Diese Bildleseeinrichtung arbeitet so, daß die abzutastenden Bildpunkte in einem polaren Koordinatensystem als Funktion des Radius R und des Winkels Theta angegeben werden und die entsprechenden Intensitäten über die Bildelementabtasteinrichtung erfaßt werden, wobei die Geschwindigkeit des die Bildabtasteinrichtung tragenden Rahmens in einer vorbestimmten Relation zur Umdrehungsgeschwindigkeit des Bildplattenhalters steht. Es ist dabei so, daß die Bildplattenabtasteinheit mit einer bestimmten Geschwindigkeit pro Umdrehung der Bildplatte radial nach innen bewegt wird, so daß die Bildplatte vollständig abgetastet wird. Die Abtastung erfolgt dabei in konzentrischen Kreisen.

Da die Geschwindigkeit der Bildplatte nicht verändert wird, je weiter die Bildabtasteinheit dem Bildplattenmittelpunkt näher kommt, wird die Abtastdauer pro Bildelement radial von außen nach innen immer größer, d.h. die Aufnahmezeiten im Außenbereich sind äußerst gering. Die Antriebe für die Bildplatte und für die radiale Verstellung der Bildabtasteinheit sind unabhängig voneinander, so daß nicht gewährleistet ist, daß bei der Abtastung von zu vergleichenden Bildplatten immer an der gleichen Stelle, d.h. immer am gleichen Startpunkt begonnen wird. Dies würde zur Erstellung von an sich unvergleichbaren Abtastergebnissen führen.

Auch bei den mit der FR-A-24 38 300 und der JP-Sho 63-306760 vorgeschlagenen Vorrichtungen ist eine spiralförmige Abtastung vorgesehen, jedoch ist hier keine gleichmäßige Abtastung vorgesehen.

Aus der DE-A- 30 14 433 ist eine Anordnung zum Abtasten von mit graphischen Mustern versehenen Vorlagen bekannt, bei der die Position von Bildpunkten mit großer Genauigkeit ermittelt werden kann, da vorgesehen ist, daß der Abtastwagen, der entlang vorgegebener gerader Abtastlinien bewegt wird, zwei Abtaster aufweist, die bestimmte Strichmarkierungen an Taktlinealen abtasten, damit so eine Zuordnung der abgetasteten Strichmarkierungen zu den erzeugten Signalen erfolgen kann. Ein Bildplattendrehwinkelkodierer oder ein Bildplattenradiuskodierer ist bei der Anordnung nach dieser Druckschrift nicht vorgesehen.

Die Aufgabe der Erfindung besteht darin, einen Bildleser der eingangs genannten Art so zu verbessern, daß bei der Lichtabtastung zur Aufnahme des auf der Bildplatte gespeicherten Bildes für das ausstrahlende Licht eine größtmögliche Lichtausbeute erzielt wird, wobei der Bildleser zur Erleichterung des Einsatzes kompakt ausgebildet sein soll.

Erfindungsgemäß erfolgt die Lösung der Aufgabe durch die Merkmale des Anspruchs 1.

Hierdurch ist ein Bildleser geschaffen worden, mit dem eine optimale Abtastung und Erfassung der Bildplatte erfolgt, da die Anpassung der Geschwindigkeit an die kinematischen Verhältnisse so erfolgt, daß jedes Bildelement mit gleicher Tangentialgeschwindigkeit abgetastet wird. Der Kerngedanke ist dabei, daß die Bildelementabtasteinheit in Abhängigkeit vom Radius R des jeweiligen Bildelementes über die Bildplatte geführt wird, und zwar so, daß alle Abtastfelder mit gleicher Geschwindigkeit überstrichen werden.

Dabei ist vorgesehen, daß die Bildelementabtasteinheit mit einer zum Radius R des jeweiligen Bildelementes umgekehrt proportionalen Geschwindigkeit radial über die Bildplatte führbar ist und/oder daß die Bildplatte mit zum Radius R des jeweiligen Bildelements umgekehrt proportionaler Rotationsgeschwindigkeit (Drehwinkelgeschwindigkeit) antreibbar ist.

Weiterhin ist bevorzugterweise eine feste Kopplung zwischen der Abtastbewegung und der Drehbewegung der Bildplatte vorgesehen, um einen immer gleichen Startpunkt zu gewährleisten. Außerdem wird vorteilhafterweise die Verwendung von zwei Lasern zur Schaffung eines kompakten und preiswerten Geräts vorgeschlagen.

Bevorzugte Ausführungsformen und Weiterbildungen der Erfindung sind in den Unteransprüchen angegeben.

Die Erfindung wird nachstehend am Beispiel von in den Zeichnungen schematisch dargestellten Ausführungsformen eines Bildlesers näher erläutert. Es zeigen.

Fig. 1 bis 3 in einer Ansicht von vorn, einer Draufsicht und einer Seitenansicht eine weitere Ausbildung eines Bildlesers in schematischen Darstellungen,

Fig. 4 ein Funktionsdiagramm des Bildlesers nach Fig. 1 bis 3,

Fig. 5 eine schematische Darstellung der Funktionsebenen eines Bildlesers,

Fig. 6 und 7 eine schematische Darstellung der Approximation der Bildelementlänge,

Fig. 8 eine schematische Darstellung der Bildelementtransformation,

Fig. 9 ein räumliches Profil der Abtastgeschwindigkeit,

Fig. 10 ein Diagramm der Abtastgeschwindigkeit, und

Fig. 11 den Drehzahlverlauf beim Abtastvorgang einer Bildplatte,

Fig. 12 in einer schematischen Darstellung die optische Einrichtung einer Bildelementabtasteinrichtung für den Bildleser,

Fig. 13 von vorn im Ausschnitt einen Bildleser in einer schematischen Ansicht,

Fig. 14 in einer Seitenansicht die Bildelementabtasteinheit,

Fig. 15 im Schnitt den Reflektor der Bildelementabtasteinheit in einer vergrößerten Seitenansicht und

Fig. 16 eine Vorrichung zur Abtastung einer Bildplatte mit einem Bildleser nach Fig. 13,

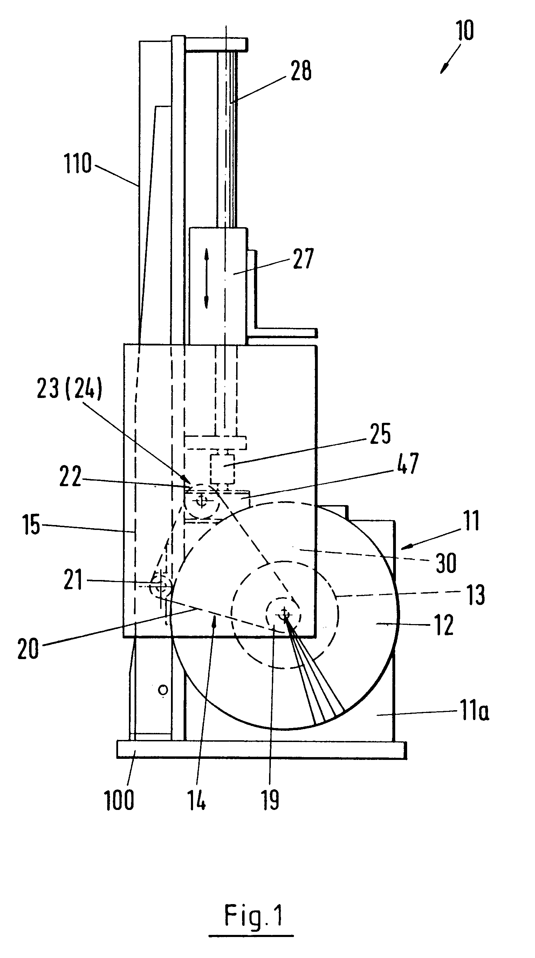

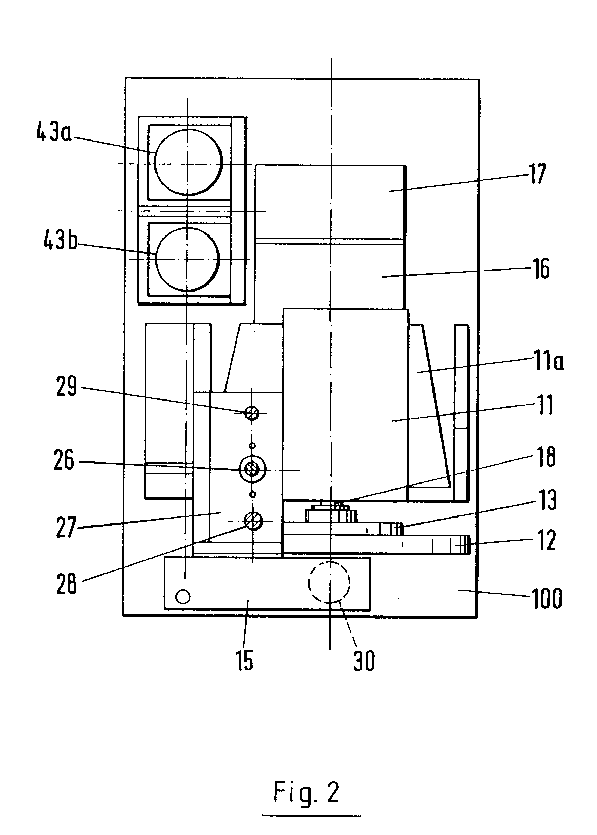

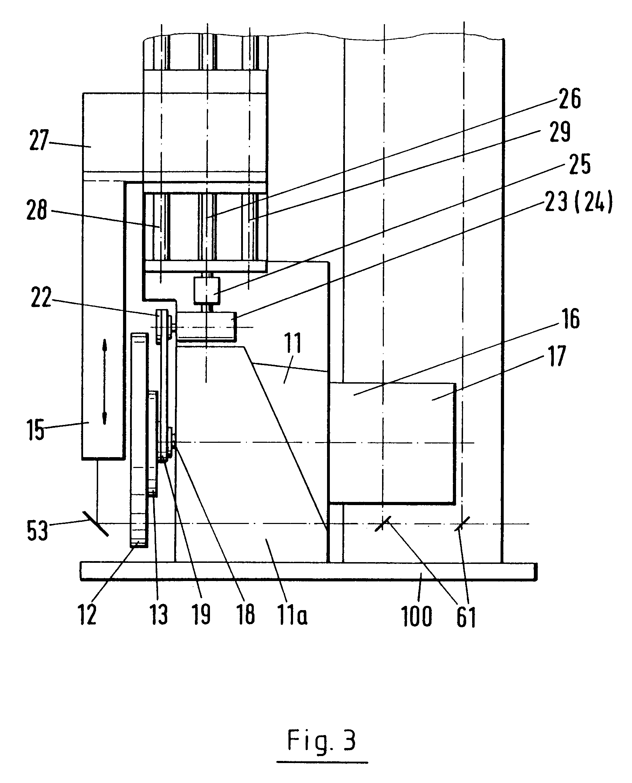

In den Fig. 1 bis 3 ist eine erste Ausführungsform eines Bildlesers 10 auf einer Grundplatte 100 an einem Halterahmen 110 schematisch dargestellt. Der Bildleser 10 ist mit einem Elektromotor 11 als AntrieDsmotor versehen, der einen Bildplattenträger 13 mit der Bildplatte 12 in Rotation versetzt und über einen Zahnriemenantrieb 14 die Bildelementabtasteinheit 15 translatorisch bewegt. Der Elektromotor 11 ist mit einem Tachogenerator 16 zur Drehzahlsteuerung und einem Bildplattendrehwinkelcodierer 17 verbunden. Auf der Antriebswelle 18 des Elektromotors 11 befindet sich ein Zahnriemenrad 19 des Zahnriementriebs 14. Der Zahnriemen 20 ist über zwei weitere Zahnriemenräder 21,22 geführt, von denen eine auf der Welle eines als Schneckengetriebe 24 ausgebildeten Getriebes 23 angeordnet ist. Dieses Schneckengetriebe 24 ist mittels einer flexiblen Kupplung 25 mit der Antriebsspindel 26 der Bildelementabtasteinheit 15 verbunden. Diese ist mittels eines Kopfhalters 27 an zwei Führungsstangen 28,29 geführt. Die Antriebsspindel 26 ist durch den Kopfhalter 27 geführt. Durch Verschieben des Kopfhalters 27 wird der Bildelementlesekopf 30 radial nach innen über die Bildplatte 12 so verfahren, daß die radiale Vorschubgeschwindigkeit proportional zu 1/Radius R ist.

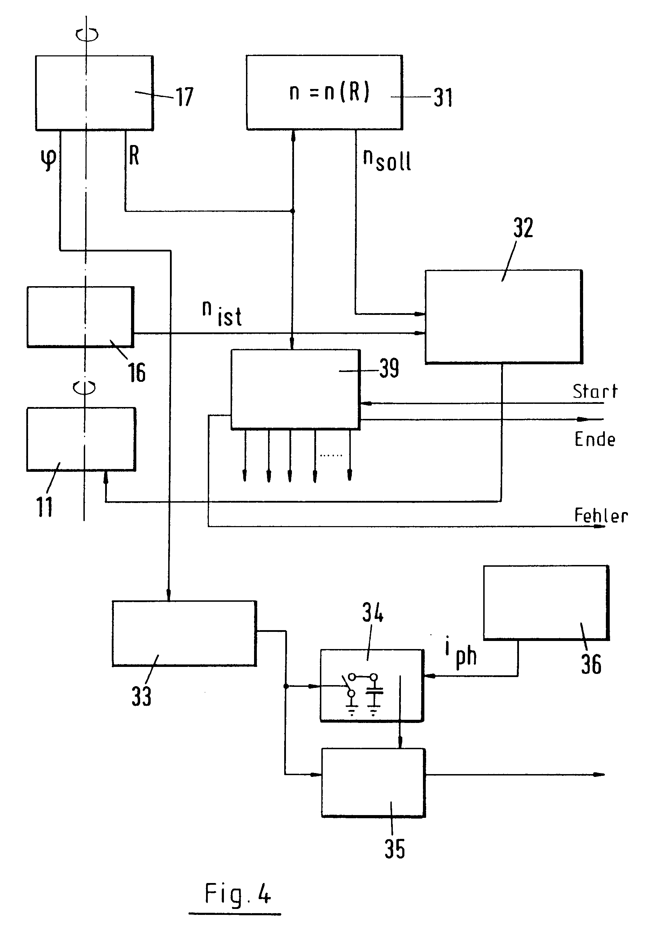

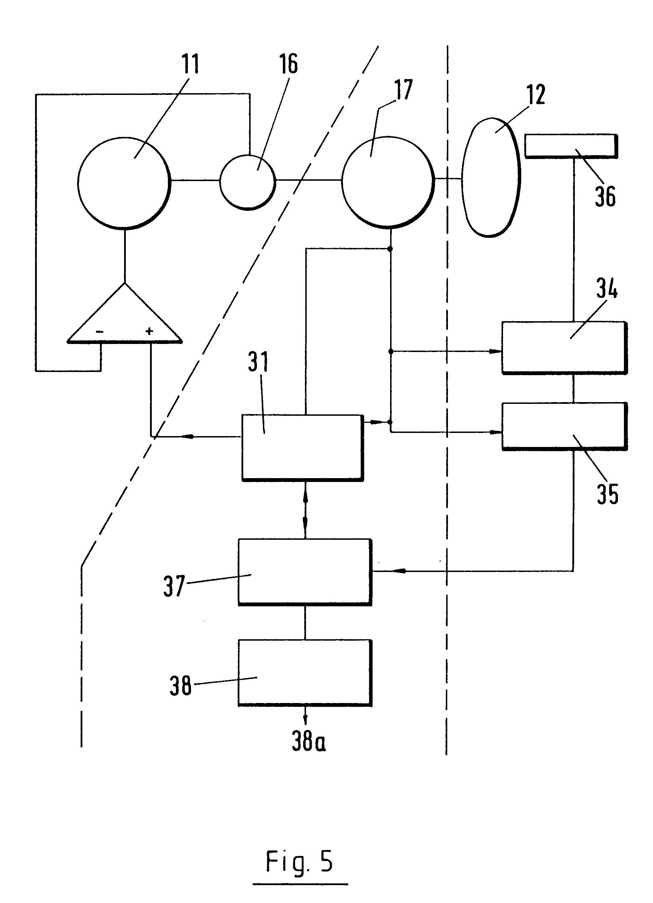

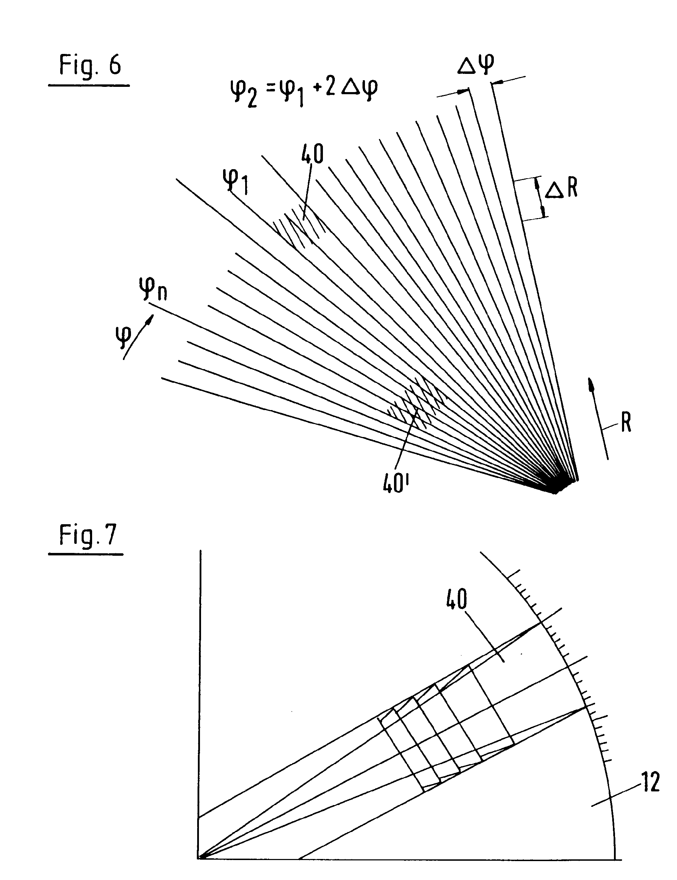

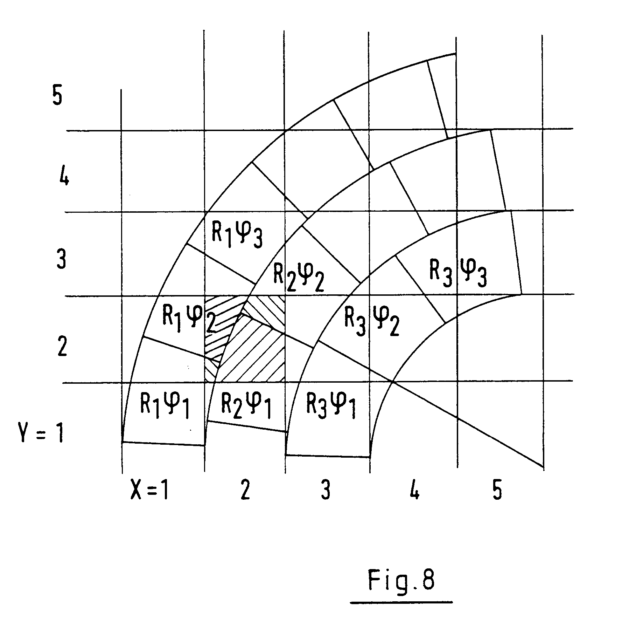

Fig. 4 und 5 verdeutlichen den Steuerungsablauf beim Betrieb des Bildlesers 10. Über dem Bildplattendrehwinkelcodierer 17 wird der Drehgeschwindigkeitsgenerator 31 angesteuert, der über einen Servoverstärker 32 den Elektromotor 11 ansteuert, der mit dem Tachogenerator 16 verbunden ist. Der Bildplattendrehwinkelcodierer 17 ist ferner mit dem Bildpunktaufteilungsgenerator 33 verbunden, der mit dem Integrator 34 und einem Digitisierer 35 in Verbindung steht. Mittels des Digitisierers 35 werden die analogen Meßwerte des Photoelektronenvervielfachers 36 in digitalisierte Meßwerte der durch spiralförmige Abtastung der Bildplatte 12 ermittelten Bildelemente 40 umgeformt und über ein Interface 37 (Fig. 5) in der Auswerteeinheit 38 weiter verarbeitet. Der Betriebsablauf wird hierbei von einer Steuereinheit 39 gesteuert, wobei die drei Bereiche der Motorsteuerung, der Steuerung und Aufteilung der Bildelemente und der Signalaufbereitung auch integrativ durchgeführt werden können. Die grundsätzlichen Probleme bei der Abtastung einer runden Bildplatte entlang einer Spirale und die hierzu gefundene Lösung sind in den Fig. 6 bis 8 schematisch erläutert. Bei der Abtastung der Bildelemente 40 verkleinern sich die Bildelementbreiten mit kleiner werdendem Radius. Aus diesem Grunde erfolgt eine Vergrößerung der Bildelementbreiten dadurch, daß mit kleiner werdendem Radius R eine Vergrößerung des Drehwinkels erfolgt (Fig. 5), der das jeweilige Bildelement 40 seitlich begrenzt. Hieraus ergeben sich mit abnehmendem Radius des spiralförmigen Abtastvorganges unterschiedlich große Bildelemente 40 (Fig. 6). In der Auswerteeinheit 38 werden dann mittels eines Algorithmus die Spiralbildpunkte in Bildpunkte eines karthesischen Koordinatensystems umgewandelt (Fig. 8). Diese kann entweder infinitesimal oder geometrisch erfolgen. Wegen der Unveränderlichkeiten der Flächentransformation sind diese lediglich einmal durchzuführen, wobei die Ergebnisse bei tabellarischer Auflistung wieder verwendet werden können.

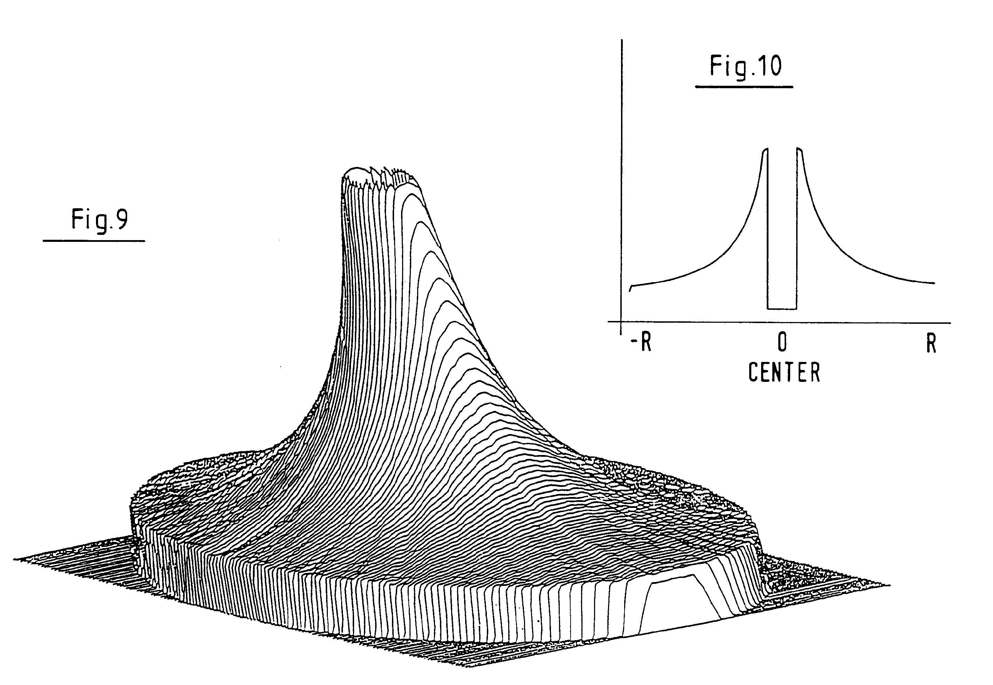

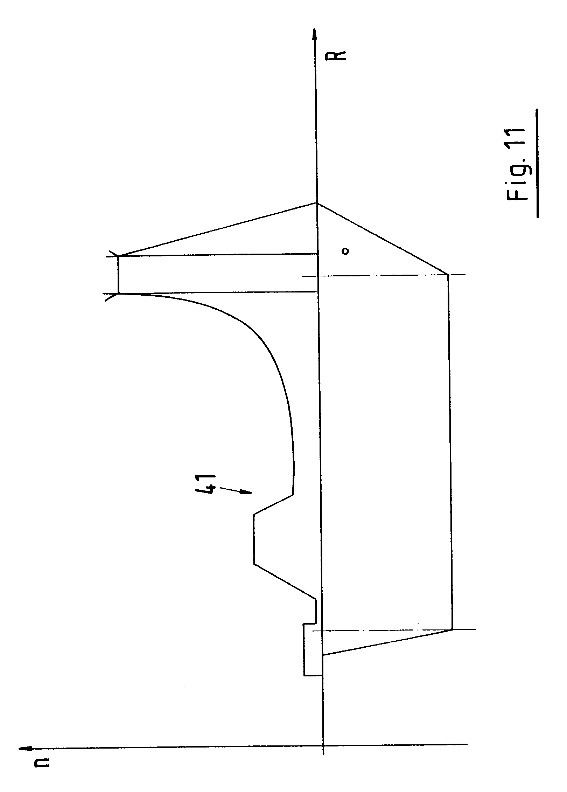

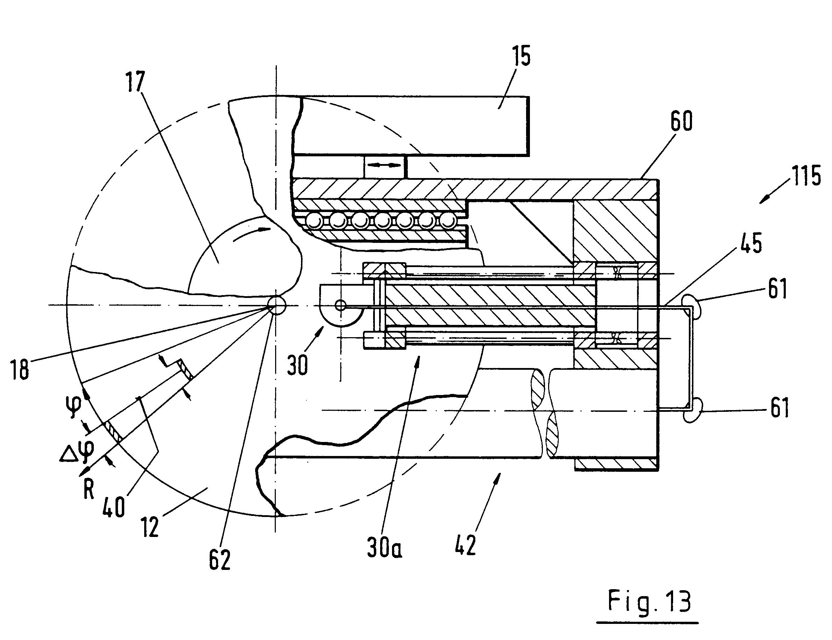

In den Fig. 9 bis 11 ist der Verlauf der Vorschubgeschwindigkeit der Bildelementabtasteinheit 15 dargestellt. Die Vorschubgeschwindigkeit beginnt mit einem geringeren Wert am Umfang der Bildplatte 12 und steigt bis zu einem Maximum im Bereich des Mittelpunktes 62 (Fig. 13) der Bildplatte 12. Der Bildelementlesekopf 30 wird zunächst an die Bildplatte 12 herangeführt und mit kurzzeitig erhöhter Drehzahl zum Startpunkt 41 geführt. Von dort verläuft die Drehzahländerung, wie in Fig. 10 dargestellt, bei der der Bildelementlesekopf 30 den Bereich des Mittelpunktes der Bildplatte 12 erreicht hat. Beim Bildleser 10 wird dann die Drehrichtung des Elektromotors 11 geändert und der Bildelementlesekopf 30 wird mit hoher Geschwindigkeit über der Bildplatte 12 zurückgezogen (Fig. 11). Gleichzeitig kann mit Leuchten die Restlichtmenge auf der Bildplatte 12 beseitigt werden.

Durch die zum Radius umgekehrt proportionale Abhängigkeit der Vorschubgeschwindigkeit kann für jedes Bildelement 40 der Bildplatte 12 eine konstante Abtastgeschwindigkeit erzielt werden. Da sich der Photoelektronenvervielfacher 36 und der als Lichtkollektor dienende Parabolreflektor 52 mit der das Laserlicht abstrahlenden Einrichtung bewegen, wird eine größtmögliche Lichtausbeute für das von dem Bildelement 40 emittierende Licht erzielt. Von Vorteil ist auch die Verwendung von zwei Laser-Lichtquellen in Verbindung mit einer gemeinsamen Sammellinse 47, da hierdurch bei kompakter Ausführung des Bildlesers 10 die Ausbeute der Lichtabtastung erheblich vergrößert wird. Die durch die spiralige Abtastung der Bildelemente 40 erzielten Meßwerte werden mittels eines Umwandlungsalgorithmus von Spiralkoordinaten in Meßwerte karthesischer Koordinaten umgewandelt. Bei der Signalverarbeitung wird durch Approximation berücksichtigt, daß die Größe der Bildelemente 40 über die Bildplatte 12 nicht konstant ist, da die Radienänderung zwischen den Ringen der Meßspirale konstant bleibt. Die mittels der Vorrichtung zu ermittelnde gewünschte Information ist die integrierte Intensität des Lichtes je Bildelement 40. Ziel ist die maximale Ausnutzung des emittierten Lichtes der Bildplatte 12. Zur Integration der Signale wird vorteilhaft ein torgesteuerter Integrator verwendet. Ein Vorverstärker wird nicht verwendet, um zu verhindern, daß Hintergrundrauschen gesteigert wird.

Es ist auch möglich, statt einer analogen Steuerung des Elektromotors 11 diesen als Schrittschaltmotor auszubilden. Hierbei ist es erforderlich, daß keine Schrittverluste auftreten und nach dem erfolgten Hochlaufen auf die Anlaufgeschwindigkeit keine Schwingungen im Gesamtsystem eintreten. Der Schrittmotor kann hierbei über einen Quarz-Oszillator mit einer festen oder variablen Pulsfolge gesteuert werden.

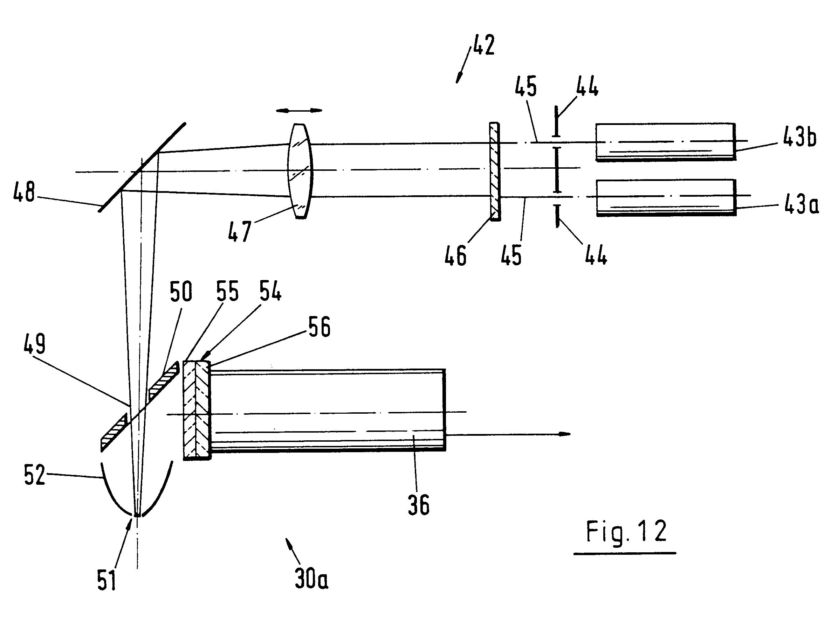

Die optische Einrichtung der Bildelementabtasteinheit 15 ist in Fig. 12 schematisch dargestellt. Die Laserlichtzuführeinrichtung 42 weist zwei Laser 43a,43b auf, deren Laserlicht durch jeweils eine Lochblende 44 geführt wird. Die Laserlichtstrahlen 45 werden durch einen Filter 46 geleitet, welches als Rotfilter z.B. des Typs OG 590 ausgebildet sein kann. Dieses Filter 46 dient zur Zurückhaltung blauer Laserlichtkomponenten. Die durch das Filter 46 durchtretenden Laserlichtstrahlen 45 werden mittels einer Sammellinse 47 fokussiert. Die Sammellinse 47 kann mit einer Beschichtung zur Unterbindung der Reflektion versehen sein und ist zweckmäßigerweise axial verschieblich, um den Fokusdurchmesser verändern zu können. Das aus der Sammellinse 47 austretende Laserlicht wird durch einen justierbaren und hoch reflektiv ausgebildeten Umlenkspiegel 48 umgelenkt und durch die Durchbrechung 49 eines UV-reflektierenden Spiegels 50 und durch eine Durchbrechung 51 eines Reflektors 52 geführt. Es ist möglich, die Laser 43a,43b, Lochblenden 44, Filter 46 und Sammellinse 47 an dem Rahmen 110 des Bildlesers 10 anzuordnen und die Laserlichtstrahlen 45 über Umlenkspiegel 53 der Bildelementabtasteinheit 15 zuzuführen oder aber auch ortsfest in dem Gehäuse der Bildelementabtasteinheit 15 anzuordnen. Die optische Bildelementabtasteinrichtung 30a (Fig.13) besteht aus dem Reflektor 52, dem Spiegel 50 und einem Photoelektronenvervielfacher 36. Diesem ist ein optischer Filter 54 vorgeschaltet, der aus zwei Blaufiltern 55,56 z.B. des Typs BG 12, BG 3 besteht. Mit diesem Filter 54 werden Rotlichtanteile des von der Bildplatte 12 reflektierten Lichtes herausgefiltert. Die Innenwand des Reflektors 52 ist vorzugsweise poliert ausgebildet. Der Reflektor 52 kann im Querschnitt parabolisch, elliptisch oder aber auch zylindrisch ausgebildet sein.

In Fig. 13 bis 16 ist eine weitere Ausführungsform einer Bildelementabtasteinheit eines Bildleser dargestellt.

Fig. 13 zeigt die Bildelementabtasteinheit 115 sowie eine Bildplatte 12 in der Draufsicht. Die Bildelementabtasteinheit 115 weist einen Rahmen 60, der radial über die Bildplatte 12 verfahrbar ist, auf. In dem Rahmen 60 ist die Laserlichtzuführeinrichtung 42 und die optische Bildelementabtasteinrichtung 30 ausgebildet. Mittels des Bildelementlesekopfes 30 kann jeweils ein Bildelement 40 der Bildplatte 12 abgetastet werden. Die Bildplatte 12 ist drehbar gelagert. Über einen angedeuteten Bildplattendrehwinkelcodierer 17 und dem hieraus generierten Winkelwert und der Anzahl der Nulldurchgänge der Bildplatte 12 aufgrund des konstanten Vorschubs errechenbaren Radius R des Bildelements 40 können die Meßwerte für die örtliche Fixierung eines jeden Bildelements 40 der Auswerteeinheit zugeführt werden. Als Laser kann ein He-Ne-Laser verwendet werden. Die Laserlichtzuführeinrichtung 42 ist im dargestellten Beispiel zweiteilig ausgebildet, wobei zwischen beiden Teilen eine Umlenkung des Laserlichtes durch zwei Spiegel 61 erfolgt.

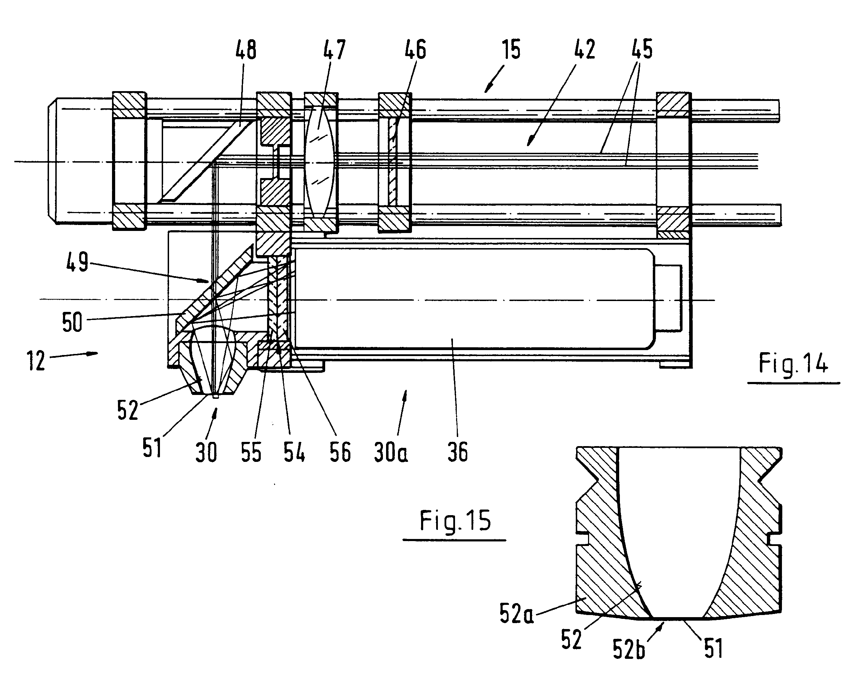

In Fig. 14 ist die Bildelementabtasteinheit 115 nach Fig.13 in einer Seitenansicht im Schnitt dargestellt. Der Bildelementlesekopf 30 der Bildelementabtasteinheit 115 enthält den Reflektor 52. Wie in Fig. 15 näher dargestellt, ist der Reflektor 52 in einem Reflektorgehäuse 52a ausgebildet, wobei an der Spitze 52b des Reflektors 52 eine Durchbrechung 51 vorgesehen ist. Diese Durchbrechung 51 dient zur Durchführung des Laserlichtes und zur Aufnahme der lichtoptischen Emissionen der mit Laserlicht beaufschlagten Kristalle von Bildelementen 40 der Bildplatte 12. Oberhalb des Reflektors 52 ist der Spiegel 50 angeordnet, der zur Umlenkung der durch die Durchbrechung 51 eintretenden lichtoptischen Emissionen auf den Photoelektronenvervielfacher 36 dient. Vor dem Photoelektronenvervielfacher 36 ist ein optischer Filter 54 mit den Blaufiltern 55,56 angeordnet. In dem Spiegel 50 ist eine Durchbrechung 49 ausgebildet, die zur Durchführung des Laserlichtstrahls 45 dient. Die Laserlichtzuführeinrichtung 42 ist oberhalb des Photoelektronenvervielfachers 36 angeordnet, kann aber auch seitlich vorgesehen sein. Durch eine seitliche Anordnung kann die Bauhöhe der Bildelementabtasteinheit 115 verringert werden. Die Laserlichtzuführeinrichtung 42 wird auch hier vorteilhafterweise von zwei Laser-Lichtquellen beaufschlagt, deren Laserlichtstrahlen 45 durch den Filter 46 der Sammellinse 47 zugeführt, durch die die Laserlichtstrahlen 45 fokussiert und über einen Umlenkspiegel 48 gebündelt durch die Durchbrechung 49 geführt werden.

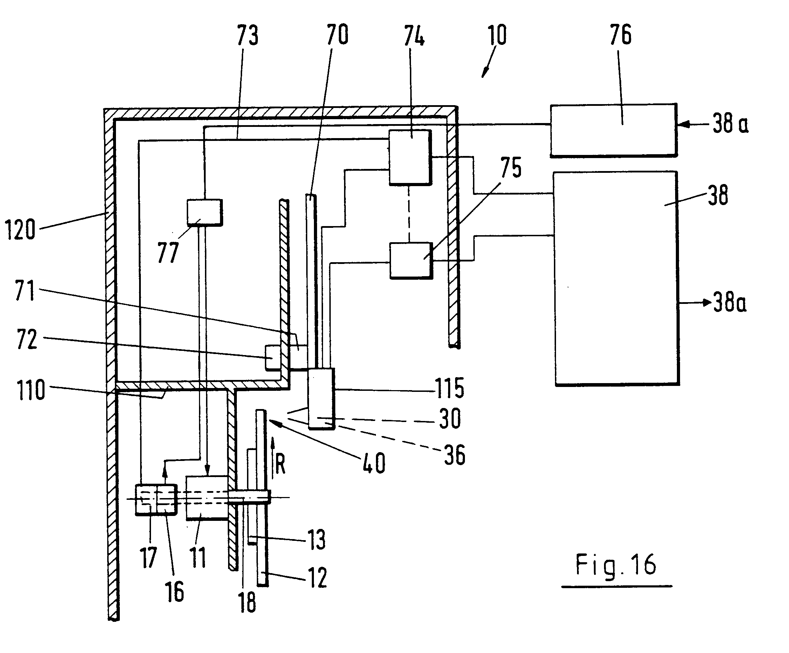

In Fig. 16 ist schematisch eine weitere Ausführungsform eines Bildlesers 10 (teilweise) dargestellt. Der Rahmen 70 der Bildelementabtasteinheit 15 ist hierbei an einem Halterahmen 110 mittels eines Stellmotors 71 verschieblich. Der Stellmotor 71 ist mit einer Steuereinrichtung 72 verbunden, durch die der Verlauf der Vorschubgeschwindigkeit des Bild elementlesekopfes 30 der Bildelementabtasteinheit 115 umgekehrt proportional zum jeweiligen durch Festellung des jeweiligen Drehwinkels (aus 17) und der Anzahl der Nulldurchgänge (Anzahl der vollständigen Umdrehung) ermitteln Radius R des Bildelements 40 der Bildplatte 12 ist, über dem sich der Bildelementlesekopf 30 befindet. Die Bildplatte 12 befindet sich auf einem Bildplattenträger 13, der auf der Antriebswelle 18 eines als Antriebsmotor dienenden Elektromotors 11 angeordnet ist, der am Halterahmen 110 bzw. am Gehäuse 120 befestigt ist. Der Bildplattendrehwinkelcodierer 17 ist mittels einer Meßwertübertragungsleitung 73 mit einem Bildpunktaufteilungsgenerator 74 verbunden. Dieser steht mit einer als elektronische Recheneinheit ausgebildeten Auswerteeinheit 38 in Verbindung,die mit einem Rechner 38a verbunden ist. Der Photoelektronenvervielfacher 36 ist über einen Stromintegrator 75 ebenfalls mit der Auswerteeinheit 38 verbunden. Durch diese werden über einen nicht dargestellten Digitalisierer die aus den vom Bildelementlesekopf 3 aufgenommenen Lichtmengen als digitale Signale zu einem digitalisierten Bild verarbeitet, das das auf der Bildplatte 12 gespeicherte Bild wiedergibt. Der Bildpunktaufteilungsgenerator 74 und der Stromintegrator 75 können auch in einem gesonderten Elektronikgehäuse außerhalb des Gehäuses 120 angeordnet werden. Von Vorteil ist es, den Bildplattendrehwinkelcodierer 17 auf der Antriebswelle 18 des Elektromotors 11 anzuordnen, wie es in der Zeichnung dargestellt ist. Hierbei wird die Umdrehungsgeschwindigkeit und der aktuelle Drehwinkel Phi ggfs. von einem Drehgeschwindigkeitsgenerator 31 aus den Impulssignalen des Bildplattendrehwinkelcodierers 17 abgeleitet. Das Drehgeschwindigkeitsprofil, das umgekehrt proportional zum Radius R ist, ist hierbei als digitale Tabelle in einer Stellmotorsteuerungseinheit 76 abgespeichert und wird mit dem vom Tachogenerator 16 abgegebenen IST-Wert verglichen, wobei von der Antriebsmotorsteuerungseinheit 77 ein Steuersignal erzeugt und dem Antriebsmotor 11 zugeleitet wird.

**Patentansprüche**

1. Bildleser (10) für eine Vorrichtung zur Abtastung einer durch Röntgenstrahlen belichteten kreisrunden Bildplatte (12) mit zum Bildplattenmittelpunkt einen Abstand (Radius R) aufweisenden Bildelementen (40) mittels Laserstrahlen, mit einem Bildplattenhalter (13), der durch einen Elektromotor (11) mit einstellbarer Drehzahl antreibar ist und auf dem die Bildplatte (12) lösbar angeordnet ist, mit einer Bildelementabtasteinheit (15;115), die mittels eines Antriebes (14;71) mit vorgebbarer Vorschubgeschwindigkeit radial über die Bildplatte (12) verfahrbar ist und eine Laserlichtzuführeinrichtung (42) und eine oplische Bildelementabtasteinrichtung (30a) einer oploelektronischen Meßwertübertragungseinrichtung mit einem Photoelektronenvervielfacher (36) aufweist und mit einer Signalaufbereitungseinrichtung,
dadurch gekennzeichnet,
daß die Bildelementabtasteinheit (15;115) jedes Bildelement (40) mit gleicher Tangentialgeschwindigkeit abtastend über die Bildplatte (12) radial so führbar ist, daß die Bildplatte (12) über den Antrieb (11) mit einer zum jeweiligen Radius (R) des jeweiligen Bidelements (40), über dem sich der Bildelementlesekopf (30) der Bildelementabtasteinheit (15;115) befindet, umgekehrt proportionalen Rotationsgeschwindigkeit (Derhwinkelge-

EP 0 420 089 B1

schwindigkeit) antreibar ist und/oder daß die Bildelementabtasteinheit (15;115) mit einer zum Radius (R) des jeweiligen Bildelements (40) umgekehrt proportionalen Geschwindigkeit radial über die Bildplatte (12) führbar ist, wodurch eine konstante Verweildauer der Bildelementabtasteinheit (15; 115) über jedem Bildelement (40) erzielt wird.

2. Bildleser nach Anspruch 1,
dadurch gekennzeichnet,
daß der Antrieb (11) der Bildplatte (12) und der Antrieb (14) der Bildelementabtasteinheit (15;115) fest gekoppelt sind und daß der Antrieb (14) mit der Bildelementabtasteinheit (15;115) über ein Getriebe (23) verbunden ist, über das der Verlauf der Umdrehungsgeschwindigkeit umgekehrt proportional zum jeweiligen Radius R des Bildelements (40) der Bildplatte (12) eingestellt ist, über dem sich der Bildelementlesekopf (30) der Bildelementabtasteinheit (15,115) befindet.

3. Bildleser nach Anspruch 1,
dadurch gekennzeichnet,
daß die Bildelementabtasteinheit (15;115) über einen Stellmotor (71) verfahrbar ist, der mit einer Steuereinrichtung (72) verbunden ist, durch die der Verlauf der Radialgeschwindigkeit umgekehrt proportional zum jeweiligen Radius R des Bildelements (40) der Bildplatte (12) eingestellt ist, über dem sich der Bildelementlesekopf (30) der Bildelementabtasteinkeit (15;115) befindet.

4. Bildleser nach einem der Ansprüche 1 bis 3,
dadurch gekennzeichnet,
daß die Laserlichtzuführeinrichtung (42) eine von zwei Laser-Lichtquellen 43a,43b) über einen optischen Filter (46) beaufschlagte Sammellinse (47) aufweist, durch die das Laserlicht fokussiert wird.

5. Bildleser nach einem der Ansprüche 1 bis 4,
dadurch gekennzeichnet,
daß die Signataufbereitungseinrichtung aus dem Photoelektronenvervietfacher (36), einem Stromintegrator (75), dem Bildpunktaufteitungsgenerator (74) und einem Digitisierer (35) zur Digitatisierung oploelektronisch analog gemessener Emissionen spiralenförmig auf der Bildplatte (12) abgetasteler Bildelemente (40) besteht.

6. Bildleser nach Anspruch 1,
dadurch gekennzeichnet,
daß in der Bildelementabtasteinheit (15;115) eine Lasertichtumlenkeinrichtung (61) angeordnet ist, die der Laserlichtzuführeinrichtung (42) zugeordnet ist, die im Gehäuse (120) ortsfest angeordnet ist.

7. Bildleser nach Anspruch 1,
dadurch gekennzeichnet,
daß mit dem Bildplattenträger (13) ein Meßwertaufnehmer für einen Bildplattendrehwinketcodierer (17) der Bildelementabtasteinrichtung (30a) verbunden ist.

8. Bildleser nach Anspruch 1,
dadurch gekennzeichnet,
daß mit dem Bildplattenträger (13) ein Bildplattendrehwinketcodierer (17) ats Meßwertaufnehmer der Bildelementabtasteinrichtung (30a) verbunden ist.

9. Bildleser nach Anspruch 1,
dadurch gekennzeichnet,
daß der Etektromotor (11) mit einem Tachogenerator (16) und einem Drehgeschwindigkeitsgenerator (31) verbunden ist.

10. Bildleser nach Anspruch 7,
dadurch gekennzeichnet,
daß den Meßwertausgängen des Bildplattendrehwinketcodierers (17) der Bildpunktaufteitungsgenerator (74) zugeordnet ist.

11. Bildleser nach Anspruch 10,
dadurch gekennzeichnet,
daß zwischen den Meßwertausgängen des Bildplattendrehwinketcodierers (17) und den Meßwerteingängen des Bildpunktaufteitungsgenerators (74) eine Meßwertübertragungsteitung (73) angeordnet ist.

12. Bildleser nach einem der Ansprüche 1 bis 9,
dadurch gekennzeichnet,
daß die Antriebswette (18) des Etektromotors (11) mittets eines Getriebes (23) mit einer Antriebsspindet (26) verbunden ist, mittets derer die Bildelementabtasteinheit (15) transtatorisch radiat zur Bildplatte (12) verschiebbar ist.

13. Bildleser nach Anspruch 12,
dadurch gekennzeichnet,
daß auf der Antriebswette (18) des Etektromotors (11) ein Zahnriemenrad (19) angeordnet ist, über das ein Zahnriemen (20) geführt ist, der mit einem weiteren Zahnriemenrad (22) in Eingriff ist, das mit einem ats Schneckengetriebe (24) ausgebitdelen Getriebe (23) verbunden ist.

14. Bildleser nach Anspruch 12 oder 13,
dadurch gekennzeichnet,
daß an der Bildelementabtasteinheit (15) ein Kopfhatter (27) ausgebitdet ist, der auf Führungsstangen (28,29) geführt und mit der Antriebsspindet (26) im Eingriff ist.

15. Bildleser nach Anspruch 1, bei dem der Bildelementtesekopf (30) der Bildelementabtasteinheit (15,115) einen Reftektor (52) aufweist, in dessen Spitze 52b) eine Durchbrechung (51) zur Durchführung, des Laserlichtes und zur Aufnahme der lichtoptischen Emission der mit Laserlicht beaufschtagten Kristatte des Bildelements (40) der Bildplatte (12) ausgebitdet ist und bei dem in dem Bildelementtesekopf (30) ein Spieget (50) zur Umlenkung der eintrelenden tichtoplischen Emission der mit Laserlich beaufschlagten Kristalle der Bildelemente (40) der Bildplatte (12) auf den Photoelektronenvervietfacher (36) angeordnet ist, mit einer in dem Spieget (50) zur Durchführung des Laserlichtstrahtes ausgebildelen Durchbrechung (49),
dadurch gekennzeichnet,
daß der Spiegel (50) oberhalb des Reflektors (52) angeordnet ist.

16. Bildleser nach Anspruch 15,
dadurch gekennzeichnet,
daß der Reflektor (52) im Querschnitt paraboloid oder ellipsoid oder ats Kombination von beiden (abschnittsweise paraboloid und abschnittsweise ellipsoid) ausgebildet ist.

17. Bildleser nach einem der Ansprüche 1 bis 16,
dadurch gekennzeichnet,
daß vor dem Photoelektronenvervielfacher (36) ein optischer Filter (54) angeordnet ist.

18. Bildleser nach Anspruch 4,
dadurch gekennzeichnet,
daß die Sammellinse (47) koaxial zu den Laserlichtstrahlen (45) verschieblich ist.

19. Bildleser nach Anspruch 4,
dadurch gekennzeichnet,
daß im Laserstrahlweg hinter der Sammellinse (47) ein Umlenkspiegel (48) oberhalb oder seitlich des Spiegels (50) angeordnet ist.

20. Bildleser nach einem der Ansprüche 1 bis 19,
dadurch gekennzeichnet,
daß der Reflektor (52) ein vor dem Photoelektronenvervielfacher (36) angeordneler oplischer Filter (54), der Photoelektronenvervielfacher (36) und der Stromintegrator (75) eine oploelektronische Meßwertübertragungseinrichtung bilden.

21. Bildleser nach den Ansprüchen 7 oder 8,
dadurch gekennzeichnet,
daß die Bildetementabtasteinrichtung (30a) aus dem Bildplattendrehwinkelcodierer (17) dem und dem Bildpunktaufteilungsgenerator (74) besteht.

## Claims

1. Image plate scanner (10) for a device for scanning by means of laser beams a circular disk (12) exposed by X-rays with image elements (40) spaced a: a distance (radius R) from the central point of the videodisk, with a videodisk carrier (13) which is drivable by an electromotor (11) with adjustable rotational speed and on which the videodisk (12) is detachably mounted, with an image element scanning unit (15; 115) which is drivable with the aid ofa drive assembly (14; 71) at a presettable speed of advance and which is radially displaceable across the videodisk (12) and a laser light supply means (42) and an oplical image element scanner (30a), and which is provided with an optoelectronic measured value transmission means with a photomultiplier (36) and with a signal conditioning means,
characterized in that
the image element scanning unit (15;115) can be radially traversed scanningly at the same tangential speed across the videodisk (12) in such a way that the videodisk (12) can, with the aid of the drive assembly (11), be driven at a rotational speed (rotational position speed) which is inversely proportioned to the respective radius (R) of the image element (40), and/or that the image element scanning unit (15;115) can be radially traversed across the videodisk (12) at a speed which is inversely proportional to the radius (R) of the respective image element (40), by means of which a constant dwell time of the image element scanning unit (15;115) above each image element (40) is obtained.

2. Image plate scanner according to Claim 1, characterized in that the drive assembly (11) of the videodisk (12) and the drive assembly (14) of the image element scanning unit (15;115) are rigidly coupled and in that the drive assembly (14) is connected to the image element scanning unit (15;115) by means of a gear drive (23), with the aid of which the pattern of the rotation speed is adjusted so as to be inversely proportional to the respective radius R of the image element (40) of the videodisk (12), above which the image element read head (30) of the image element scanning unit (15;115) is located.

3. Image plate scanner according to Claim 1,
characterized in that
the image element scanning unit (15;115) is displaceable by means of a servomotor (71) which is connected to a control unit (72), with the aid of which the pattern of the radial velocity is adjusted so as to be inversely proportional to the respective radius R of the image element (40) of the videodisk (12), above which the image element read head (30) of the image element scanning unit (15;115) is located.

4. Image plate scanner according to any of Claims 1 to 3,
characterized in that
the laser light supply means (42) is provided with a collector lens (44) acted upon by two laser sources (43a,43b) via an optical filter (46), through which the laser light is focussed.

5. Image plate scanner according to any of Claims 1 to 4,
characterized in that
the signal conditioning means is comprised of the photomultiplier (36), a current integrator (75), the pixel apportionment generator (74) and a digitizer (35) for the digitization of optoelectronically analog-measured emissions of image elements scanned spirally on the videodisk (12).

6. Image plate scanner according to Claim 1,
characterized in that
in the image element scanning unit (15;115), a laser light deflection means (61) is mounted which is allocatedlto the laser light supply means (42) which is stationarily disposed in the housing (120).

7. Image plate scanner according to Claim 1,
characterized in that
a measured value receiver for a videodisk rotational position coder (17) of the image element scanning facility (30a) is connected to the videodisk carrier (13).

8. Image plate scanner according to Claim 1,
characterized in that
a videodisk rotational position coder (17) is connected to the videodisk carrier (13) in the form of a measured value receiver of the image element scanner (30a).

9. Image plate scanner according to Claim 1,
characterized in that
the electromotor (11) is connected to a tachogenerator (16) and a rotation speed generator (31).

10. Image plate scanner according to Claim 7,
characterized in that
the pixel apportionment generator (74) is allocated to the measured value outputs of the videodisk rotational position coder (17).

11. Image plate generator according to Claim 10,
characterized in that,
between the measured value outputs of the videodisk rotational position coder (17) and the measured value inputs of the pixel apportionment generator (74), a measured value transmission line (73) is installed.

12. Image plate scanner according to Claim 1 to 9 ,
characterized in that
the drive shaft (18) of the electromotor (11) is connected by means of a gear drive (23) to a power spindle (26), with the aid of which the image element scanning unit (15) is translatorily displaceable radially to the videodisk (12).

13. Image plate scanner according to Claim 12,
characterized in that
a toothed belt wheel (19) is mounted on the drive shaft (18) of the electromotor, over which a toothed belt (20) is passed which is in engagement with a further toothes belt wheel (22) which is connected to a gear drive (23) constructed in the form of a worm drive (24).

14. Image plate scanner according to Claims 12 or 13,
characterized in that,
on the image element scanning unit (15), a head support (27) is constructed which is guided on guide rails (28,29) and which is in engagement with the power spindle (26).

15. Image plate scanner according to Claim 1, in which the image element read head (30) of the image element scanning unit (15;115) is provided with a reflector (52), in whose tip (52b), an aperture (51) is constructed for the laser light to pass through and for receiving the photooptical emission of the crystals acted upon by laser light of the image element (40) of the videodisk (12) and in which, in the image element read head (30), a mirror (50) for deflecting the entering photooptical emission of the crystals of the image elements (40) of the videodisk (12) acted upon by the laser light is mounted on the photomultiplier (36), with a perforation (49) constructed in the mirror (50) for the laser light beam to be passed through,
characterized in that
the mirror (50) is mounted above the reflector (52).

16. Image plate scanner according to Claim 15,
characterized in that
the reflector (52), in its cross-section, is constructed so as to be paraboloid or ellipsoid or a combination of both (section-wise paraboloid and section-wise ellipsoid).

17. Image plate scanner according to any of Claims 1 to 16 ,
characterized in that
an optical filter (54) is inserted before the photomultiplier (36).

18. Image plate scanner according to Claim 4,
characterized in that
the collector lens (47) is coaxially displaceable relative to the laser light beams (45).

19. Image plate scanner according to Claim 7 or 8,
characterized in that,
in the laser optical path belhind the collector lens (47), a deflector mirror (48) is mounted above or at the side of the mirror (50).

20. Image plate scanner according to any of Claims 1 to 21,
characterized in that
the reflector (52) forms an optical filter (54) disposed before the photomultiplier (36), while the photomultiplier (36) and the current integrator (75) form an optoelectronic measured value transmission means.

21. Image plate scanner according to Claim 9 and 10,
characterized in that
the image element scanning facility (30a) comprises the videodisk rotational position coder (17) and the pixel apportionment generator (74).


## Revendications

1. Lecteur d'images (10) pour un dispositif jour le balayage d'une plaque d'image ronde (12) exposée aux rayons X avec des éléments d'image (40), qui présentent un écart (rayon R) par rapport au centre de la plaque d'image, au moyen de rayons laser, avec un support de plaque d'image (13) qui peut être entraîné par un moteur électrique (11) à vitesse réglable et sur lequel la plaque d'image (12) est placée de manière amovible, avec une unité de balayage d'éléments d'image (15; 115) qui peut être déplacée au moyen d'un entraînement (14; 71) avec une vitesse d'avancement qui peut être prédéterminée de manière radiale au-dessus de la plaque d'image (12) et qui présente un dispositif d'amenée de la lumière laser (42) et un dispositif de balayage optique des éléments d'image (30a) d'un dispositif de transmission optoélectronique des valeurs mesurées avec un multiplicateur de photoélectrons (36) et avec un dispositif de traitement de signal,
caractérisé en ce
que l'unité de balayage des éléments d'image (15; 115) peut être guidée au-dessus de la plaque d'image (12) de manière radiale en balayant chaque point d'image (40) avec la même vitesse tangentielle de telle manière que la plaque d'image (12) peut être entraînée par l'entraînement (11) avec une vitesse de rotation (vitesse d'angle de rotation) inversement proportionnelle au rayon respectif (R) de l'élément d'image (40) respectif, au-dessus duquel se trouve la tête de lecture des éléments d'image (15; 115) de l'unité de balayage des éléments d'image (15; 115), et/ou que l'unité de balayage des éléments d'image (15; 115) peut être guidée de manière radiale au-dessus de la plaque d'image (12) avec une vitesse inversement proportionnelle au rayon (R) de l'élément d'image (40) respectif, ce par quoi on obtient une durée de passage constante de l'unité de balayage d'éléments d'image (15; 115) au-dessus de chaque élément d'image (40).

2. Lecteur d'images selon la revendication 1,
caractérisé en ce
que l'entraînement (11) de la plaque d'image et l'entraînement (14) de l'unité de balayage d'éléments d'image (15; 115) sont couplés de manière fixe et que l'entraînement (14) est relié à l'unité de balayage d'éléments d'image (15; 115) par un engrenage (23) par lequel la courbe de la vitesse de rotation est réglée de manière inversement proportionnelle au rayon respectif R de l'élément d'image (40) de la plaque d'image 12 au-dessus duquel se trouve la tête de lecture d'éléments d'image (30) de l'unité de balayage d'éléments d'image (15, 115),

3. Lecteur d'images selon la revendication 1,

**caractérisé en ce**

que l'unité de balayage d'éléments d'image (15; 115) peut être translatée par un moteur de positionnement (71) qui est relié à un dispositif de commande (72) par lequel la courbe de la vitesse de rotation est réglée de manière inversement proportionnelle au rayon respectif R de l'élément d'image (40) de la plaque d'image 12 au-dessus duquel se trouve la tête de lecture d'éléments d'image (30) de l'unité de balayage d'éléments d'image (15, 115).

4. Lecteur d'images selon l'une des revendications 1 à 3,

**caractérisé en ce**

que le dispositif d'amenée de lumière laser (42) présente une lentille de convergence (47) exposée à deux sources de lumière laser (43a, 43b), par l'intermédiaire d'un filtre optique (46), lentille par laquelle la lumière laser est focalisée.

5. Lecteur d'images selon l'une des revendications 1 à 4,

**caractérisé en ce**

que le dispositif de traitement de signal est constitué par le multiplicateur de photoélectrons, (36), un intégrateur de courant (75), le générateur de répartition de points d'image (74) et un numérisateur (35) pour la numérisation d'émissions mesurées analogiquement de manière optoélectronique d'éléments d'image (40) balayés hélicoïdalement sur la plaque d'image (12).

6. Lecteur d'images selon la revendication 1,

**caractérisé en ce**

qu'un dispositif de déviation de lumière laser (61) est placé dans l'unité de balayage d'éléments d'image (15; 115), dispositif de déviation qui correspond au dispositif d'amenée de la lumière laser (42) qui est placé de manière fixe dans le bâti (120).

7. Lecteur d'images selon la revendication 1,

**caractérisé en ce**

qu'un transducteur pour un codeur d'angle de rotation de la plaque d'image (17) du dispositif de balayage d'éléments d'image (30a) est relié au support de plaque d'image (13).

8. Lecteur d'images selon la revendication 1,

**caractérisé en ce**

qu'un codeur d'angle de rotation de la plaque d'image (17) est relié, en tant que transducteur de l'unité de balayage d'éléments d'image (30a) est relié au support de la plaque d'image (13).

9. Lecteur d'images selon la revendication 1,

**caractérisé en ce**

que le moteur électrique (11) est relié à un générateur tachymétrique (16) et à un générateur de vitesse de rotation (31).

10. Lecteur d'images selon la revendication 7,

**caractérisé en ce**

que le générateur de répartition des points d'image (74) correspond aux sorties des valeurs mesurées du codeur d'angle de rotation de la plaque d'image (17).

11. Lecteur d'images selon la revendication 10,

**caractérisé en ce**

qu'une conduite de transmission des valeurs mesurées (73) est placée entre les sorties des valeurs mesurées du codeur d'angle de rotation de la plaque d'image (17) et les entrées des valeur: mesurées du générateur de répartition des points d'image (74).

12. Lecteur d'images selon l'une des revendications 1 à 9,

**caractérisé en ce**

que l'arbre moteur (18) du moteur électrique (11) est relié par un engrenage (23) à un arbre de commande (26) au moyen duquel l'unité de balayage d'éléments d'image (15) peut être déplacé en translation de manière radiale par rapport à la plaque d'image (12),

13. Lecteur d'images selon la revendication 12,

**caractérisé en ce**

qu'une roue de courroie dentée (19), par laquelle une courroie dentée (20) est guidée, est placée sur l'arbre moteur (18) du moteur électrique (11), la courroie dentée étant en prise avec une autre roue de courroie dentée (22) qui est reliée à un engrenage (23) configuré comme un engrenage à vis sans fin (24).

14. Lecteur d'images selon la revendication 12 ou 13,

**caractérisé en ce**

qu'un support de tête (27), qui est guidé sur des tiges de guidage (28, 29) et qui est en prise avec l'arbre de commande (26), est configuré sur l'unité de balayage d'éléments d'image (15).

15. Lecteur d'images selon la revendication 1, dans lequel la tête de lecture des éléments d'image (30) de l'unité de balayage d'éléments d'image (15, 115) présente un réflecteur (52) à l'extrémité (52b) duquel une découpure (51) est configurée pour le passage de la lumière laser et pour absorber les émissions optiques des cristaux de l'élément d'image (40) de la plaque d'image (12) exposés à la lumière laser et dans lequel un miroir (50) pour la déviation de l'émission optique d'arrivée des cristaux des éléments d'image (40) de la plaque d'image (12) sur le multiplicateur de photoélectrons est placé dans la tête de lecture des éléments d'image (30), avec une découpure (49) ménagée dans le miroir (50) pour le passage du rayon de lumière laser,

**caractérisé en ce**

que le miroir (50) est placé au-dessus du réflecteur (52).

16. Lecteur d'images selon la revendication 15,

**caractérisé en ce**

que le réflecteur (52) est configuré de section paraboloïde, ellipsoïde ou comme une combinaison des deux (partiellement de section paraboloïde et partiellement de section ellipsoïde).

17. Lecteur d'images selon l'une des revendications 1 à 16,

**caractérisé en ce**

qu'un filtre optique (54) est placé devant le multiplicateur de photoélectrons (36).

18. Lecteur d'images selon la revendication 4,

**caractérisé en ce**

que la lentille convergente (47) est translatable de manière coaxiale par rapport aux rayons de lumière laser (45).

19. Lecteur d'images selon la revendication 4,

**caractérisé en ce**

qu'un miroir de déviation (48) est placé dans le trajet des rayons laser derrière la lentille convergente (47) au-dessus ou à côté du miroir (50),

20. Lecteur d'images selon l'une des revendications 1 à 19,

**caractérisé en ce**

que le réflecteur (52), un filtre optique (54) placé devant le multiplicateur de photoélectrons (36), le multiplicateur de photoélectrons (36) et l'intégrateur de courant (75) forment un dispositif de transmission optoélectronique des valeurs mesurées.

21. Lecteur d'images selon les revendications 7 ou 8,

**caractérisé en ce**

que le dispositif de balayage d'éléments d'image (30a) est constitué par le codeur d'angle de rotation de plaque d'image (17) et le générateur de répartition de points d'image.

Fig.1

Fig. 2

Fig. 3

$n = n(R)$ — 31

$n_{soll}$

$n_{ist}$

Start

Ende

Fehler

$i_{ph}$

Fig. 4

Fig. 5

Fig. 6

$$\varphi_2 = \varphi_1 + 2\,\triangle\varphi$$

Fig. 7

Fig.8

Fig.9

Fig.10

CENTER

-R    0    R

Fig. 11

Fig.12

EP 0 420 089 B1

Fig.13

EP 0 420 089 B1

Fig.14

Fig.15

Fig.16

EP 0 420 089 B1